# EUROPEAN PATENT SPECIFICATION

(11) **EP 3 741 204 B1**
(45) Date of publication and mention of the grant of the patent: **17.11.2021**
(21) Application number: 20175690.5
(22) Date of filing: 20.05.2020
(51) Int. Cl.: A01G 18/70

(54) **HARVESTING CONVEYOR BELT FOR MUSHROOMS**
ERNTEFÖRDERBAND FÜR PILZE
TAPIS ROULANT DE RÉCOLTE POUR CHAMPIGNONS

(30) Priority: 20.05.2019 NL 2023167
(43) Date of publication of application: 25.11.2020
(73) Proprietor: Lemmen, Jacobus Alexander Jozef, 5928 LW Venlo (NL); Van Doremaele, Marcus Gerardus Maria, 5334 LB Velddriel (NL)
(72) Inventor: Lemmen, Jacobus Alexander Jozef, 5928 LW Venlo (NL); Van Doremaele, Marcus Gerardus Maria, 5334 LB Velddriel (NL)
(74) Representative: Patentwerk B.V.

(56) References cited:
- CN-A- 107 647 455
- CN-A- 107 736 637
- GB-A- 2 298 597
- NL-C2- 1 000 270

## Description

The present invention relates to a harvesting conveyor belt for mushrooms.

The Chinese patent applications CN 107 647 455 and CN107736637 disclose devices for cutting stipes from mushroom caps. They discloses a metal conveyor belt with semi-elliptical or triangular openings for receiving mushroom stipes, which belt together with a cooperating metal part forms a cutting knife.

The Dutch patent NL1000270 discloses a device for sorting mushrooms with various cap sizes. It has holes with such size that all mushrooms with a smaller cap size fall through the conveyor.

The above mentioned devices can be used in combination with the present invention, which is related to the harvesting of mushrooms and the transport of the harvested mushrooms without damaging their stipes or losing mushrooms with a small cap size.

It is known in the art to make use of harvesting conveyor belts when harvesting mushrooms. These belts are usually arranged besides or along the growing beds for the mushrooms and may extend to a sorting and packaging location or station. The use of conveyor belts takes away the need for harvesters to carry baskets with them.

The harvesting conveyor belts according to the art can mainly be divided in two types: those with rounded holes or apertures for receiving the stipe of a mushroom, and those that are actually composed of two conveyor belts that are placed next to each other, with a gap in between for receiving the stipe of a mushroom.

A common disadvantage of both types however is that they are optimised for one size of mushrooms. In case of a harvesting belt with rounded holes, the diameter of the holes sets restrictions to a maximum size of the stipe and a minimum size of the cap of the mushrooms. One solution may be to provide multiple sizes of holes in the conveyor belt, but this makes the harvesting process more difficult for the harvesters.

The solutions with a belt with gap have the additional disadvantages of a more complex construction and the fact that their use is mainly limited to horizontal transportation of the mushrooms, since mushrooms may tend to slide when an up- or downhill trajectory is comprised.

Nowadays mushroom growing cells and shelvings have growing beds at multiple levels, which makes it necessary to transport the harvested mushrooms from different levels to the sorting and packaging location. For that purpose, the state of the art conveyor belts have appeared to be less suitable.

It is therefore a goal of the present invention to provide a conveyor belt for harvesting mushrooms that takes away the disadvantages of the prior art.

The invention thereto proposes a conveyor belt, having a width and extending in a length direction perpendicular to said width, comprising at least one aperture for receiving a mushroom stipe, wherein said aperture comprises in the length direction of the conveyor belt at least a part wherein its width decreases, wherein the decrease in the width of the aperture extends in the length direction over a distance that is more than half of the decrease in width.

In a preferred embodiment, the decrease in the width of the aperture extends over at least 20 mm in the length direction and the decrease is between 10 and 20 mm and in particular between 15 and 20 mm at least 20 mm in the width direction.

The belt according to the invention has an aperture for receiving mushrooms, with a varying width and is this suitable for accommodating mushrooms with stipes of different sizes. The wedge-like shape that is the result of the decrease in width of the aperture allows to place mushrooms with a range of stipe-sizes.

The orientation of the decrease in the width of the aperture may either be in the up- or downstream direction with respect to an intended direction of movement of the conveyor belt during normal use. In case of an expected downhill trajectory, the smallest side of the aperture may be leading, in case of an uphill trajectory, the smallest side of the aperture may be lagging. This has the benefit that gravity pulls the mushrooms to a direction in which they remain supported.

In a preferred embodiment, the decrease in the width of the aperture extends over at least 25 mm and preferably over at least 30 mm. These sizes allow to place the normal range of mushroom sizes.

The decrease in width is preferably a gradual decrease, so harvesters can place the mushroom at the widest part of the aperture and then move it to the smaller part to clamp it.

Although multiple forms and shapes are thinkable, those wherein the decrease in width is a linear decrease may be preferred for the ease of production.

In a further embodiment, the harvesting conveyor according to the invention comprises at least one aperture for receiving a mushroom stipe, wherein said aperture comprises in the length direction of the conveyor belt at least a part wherein its width increases. In other words, there is also a decrease in the width of the aperture in the other direction. This increase (or reversely oriented decrease) in the width of the aperture may also extend over at least 20 mm in the length direction and the increase is between 10 and 20 mm and in particular between 15 and 20 mm in the width direction.

The increase and decrease of the width of the aperture may be in different apertures, but in a further embodiment of the present invention, they are part of the same aperture. This aperture comprises for instance a rhomboid shape, in particular a rounded rhomboid shape.

However, an aperture comprising a triangular shape, in particular a rounded triangular shape is also thinkable.

Any harvesting conveyor belt according to the present invention normally comprises multiple apertures. A configuration with two conveyor belts and an aperture in between, which aperture has a width that repeatedly increases and decreases also falls within the scope of the invention.

In case of multiple apertures, at least some of them may be mirrored in a mirror line in the width direction of the conveyor belt. Said conveyor belt may preferably be an endless belt.

The invention also relates to a mushroom harvesting device, comprising a harvesting conveyor according to any of the preceding claims, guided around at least two rollers, wherein at least one of the rollers is provided with a drive. At least part of the harvesting conveyor belt may herein extend uphill or downhill between a pair of rollers it is guided around.

The invention will now be elucidated into more detail with reference to the following figures. Herein:
- Figures 1 shows a harvesting conveyor belt with a number of apertures according to the present invention;
- Figure 2 shows a second embodiment of a harvesting conveyor belt according to the present invention; and
- Figure 3 shows a first embodiment of a harvesting conveyor belt according to the present invention.

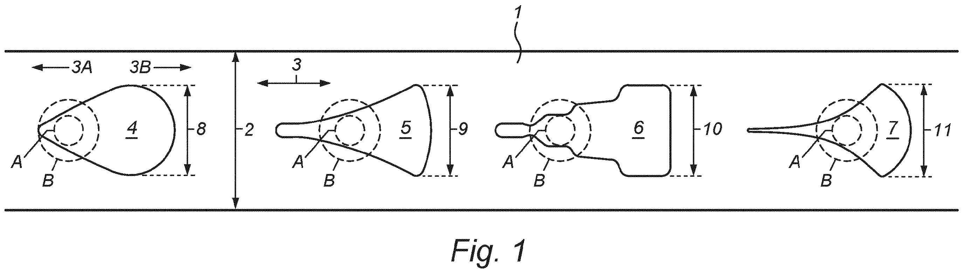

Figure 1 shows a harvesting conveyor belt for mushrooms, comprising a conveyor belt 1, having a width and extending in a length direction 3 perpendicular to said width 2, and comprising a number of examples of apertures 4, 5, 6, 7, each for receiving a mushroom stipe A. The mushroom stipe A has a smaller diameter than the mushroom cap B, that is supported by the conveyor belt 1. Figure 1 shows a belt that has apertures 4, 5, 6, 7, with different shapes, having in common that all apertures 4, 5, 6, 7, comprise in the length direction 2 of the conveyor belt at least a part wherein its width 8, 9, 10, 11 decreases, wherein the decrease in the width 8, 9, 10, 11 of the aperture 4, 5, 6, 7 extends over at least 20 mm in the length direction and the decrease is between 10 and 20 mm in the width direction. As such, the decrease in the width of the aperture extends in the length direction over a distance that is more than half of the decrease in width.

Mushrooms can be placed in the apertures by a harvester and then be shifted in the direction 3A, against a conveyance direction 3B, until their stipe touches the edge of the aperture. The shape of the aperture having a part wherein its width decreases guarantees that there is always one position where a mushroom is supported, regardless of its size. In a practical embodiment, all apertures of one specific conveyor belt are likely to have the same or an identical shape. All embodiments of a belt according to the invention also provide the benefit of being able to support mushrooms of various sizes.

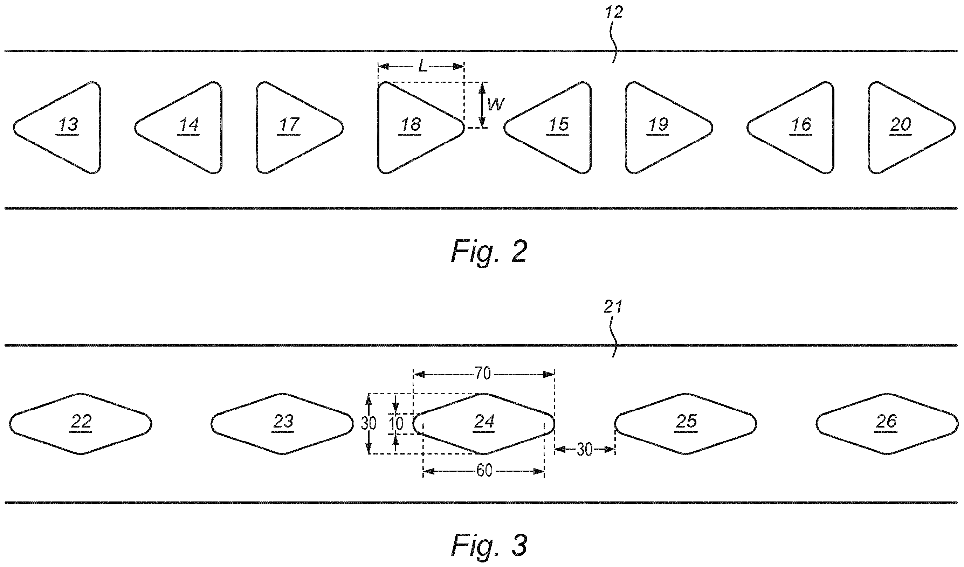

Figure 2 shows a harvesting conveyor 12, according to the invention, wherein the decrease in the width W of the aperture extends over a length L of at least 25 and preferably over at least 30 mm. The decrease W in width is a gradual decrease and more in particular a linear decrease, leading to an essentially triangular shape of the aperture. The conveyor belt comprises multiple apertures 13-20, of which the triangular shapes are rounded at their corners, and wherein at least some apertures 17-20 are mirrored in a mirror line in width direction (not shown). Mirroring part of the apertures 13-20 provides the advantage that the belt can also be used on trajectories that have an uphill or downhill part.

Figure 3 shows yet a further embodiment 21 of a conveyor belt according to the invention, wherein all apertures 22-26 comprise a rounded rhomboid shape. Aperture 24 is provided with size indicators in millimeters, showing optimal experimental sizes of the aperture. Subsequent apertures may for instance be at least 30 mm spaced, and the conveyor belt is preferably an endless belt.

The examples given are examples only and do by no means (serve to) limit the scope of the present invention, which is defined by the following claims.

## Claims

1. Harvesting conveyor (1) for mushrooms, comprising:
- A conveyor belt, having a width (2) and extending in a length direction (3) perpendicular to said width;
- comprising at least one aperture (4, 5, 6, 7) for receiving a mushroom stipe, wherein
- said aperture (4, 5, 6, 7) comprises in the length direction (3) of the conveyor belt (1) at least a part wherein its width decreases,
wherein
- the decrease in the width (2) of the aperture extends in the length direction (3) over a distance that is more than half of the decrease in width
**characterized in that** the decrease in the width of the aperture extends over at least 20 mm in the length direction, preferably at least 25 mm and more preferably over at least 30 mm, and the decrease is between 10 and 20 mm and in particular between 15 and 20 mm.

2. Harvesting conveyor (1) according to claim 1, comprising at least one aperture (4, 5, 6, 7) for receiving a mushroom stipe, wherein said aperture (4, 5, 6, 7) comprises in the length direction (3) of the conveyor belt at least a part wherein its width increases, wherein the increase in the width of the aperture extends over at least 20 mm in the length direction and the increase is between 10 and 20 mm and in particular between 15 and 20 mm at least 20 mm in the width direction.

3. Harvesting conveyor (1) according to claim 1 of 2, wherein the aperture (4, 5, 6, 7) that comprises in the length direction (3) of the conveyor belt (1) at least a part wherein its width decreases and the aperture (4, 5, 6, 7) that comprises in the length direction (3) of the conveyor belt (1) at least a part wherein its width increases are one and the same aperture (4, 5, 6, 7).

4. Harvesting conveyor 1 according to any of the preceding claims, wherein the decrease in width is a gradual decrease.

5. Harvesting conveyor 1 according to any of the preceding claims, wherein the decrease in width is a linear decrease.

6. Harvesting conveyor (1) according to any of the preceding claims, wherein the aperture (4, 5, 6, 7) comprises a rhomboid shape, in particular a rounded rhomboid shape.

7. Harvesting conveyor (1) according to any of claims 1-6, wherein the aperture (4, 5, 6, 7) comprises a triangular shape, in particular a rounded triangular shape.

8. Harvesting conveyor (1) according to any of the preceding claims, comprising multiple apertures (4, 5, 6, 7).

9. Harvesting conveyor (1) according to claim 8, wherein at least some apertures (4, 5, 6, 7) are mirorred in a mirror line in a width direction (2).

10. Harvesting conveyor (1) according to any of the preceding claims, wherein the conveyor belt is an endless belt.

11. Mushroom harvesting device, comprising a harvesting conveyor (1) according to any of the preceding claims, guided around at least two rollers, wherein at least one of the rollers is provided with a drive.

12. Mushroom harvesting device according to claim 11 wherein at least part of the harvesting conveyor belt (1) extends uphill or downhill between a pair of rollers it is guided around.

13. Method for transporting mushrooms, in particular uphill or downhill, comprising the use of a harvesting conveyor (1) according to any of claims 1-10 and/or a device according to claim 11 or 12.

## Patentansprüche

1. Ernteförderer (1) für Pilze, umfassend:
- ein Förderband, das einen Breite (2) aufweist und sich senkrecht zur Breite in einer Längsrichtung (3) erstreckt;
- umfassend mindestens eine Öffnung (4, 5, 6, 7) zur Aufnahme eines Pilzstiels, wobei
- die Öffnung (4, 5, 6, 7) in der Längsrichtung (3) des Förderbands (1) mindestens einen Teil umfasst, in dem ihre Breite abnimmt, wobei
- die Abnahme der Breite (2) der Öffnung in der Längsrichtung (3) über eine Strecke verläuft, die mehr als die Hälfte der Abnahme der Breite beträgt, **dadurch gekennzeichnet, dass** die Abnahme der Breite der Öffnung über mindestens 20 mm in der Längsrichtung, vorzugsweise mindestens 25 mm und besonders bevorzugt über mindestens 30 mm verläuft und die Abnahme zwischen 10 und 20 mm und insbesondere zwischen 15 und 20 mm beträgt.

2. Ernteförderer (1) nach Anspruch 1, umfassend mindestens eine Öffnung (4, 5, 6, 7) zur Aufnahme eines Pilzstiels, wobei die Öffnung (4, 5, 6, 7) in der Längsrichtung (3) des Förderbands mindestens einen Teil umfasst, in dem ihre Breite zunimmt, wobei die Zunahme der Breite der Öffnung über mindestens 20 mm in der Längsrichtung verläuft und die Zunahme zwischen 10 und 20 mm und insbesondere zwischen 15 und 20 mm in der Breitenrichtung beträgt.

3. Ernteförderer (1) nach Anspruch 1 oder 2, wobei die Öffnung (4, 5, 6, 7), die in der Längsrichtung (3) des Förderbands (1) mindestens einen Teil umfasst, in dem ihre Breite abnimmt, und die Öffnung (4, 5, 6, 7), die in der Längsrichtung (3) des Förderbands (1) mindestens einen Teil umfasst, in dem ihre Breite zunimmt, ein und dieselbe Öffnung (4, 5, 6, 7) sind.

4. Ernteförderer (1) nach einem der vorhergehenden Ansprüche, wobei die Abnahme der Breite eine allmähliche Abnahme ist.

5. Ernteförderer (1) nach einem der vorhergehenden Ansprüche, wobei die Abnahme der Breite eine lineare Abnahme ist.

6. Ernteförderer (1) nach einem der vorhergehenden Ansprüche, wobei die Öffnung (4, 5, 6, 7) eine Rautenform, insbesondere eine abgerundete Rautenform, umfasst.

7. Ernteförderer (1) nach einem der Ansprüche 1-6, wobei die Öffnung (4, 5, 6, 7) eine Dreiecksform, insbesondere eine abgerundete Dreiecksform, umfasst.

8. Ernteförderer (1) nach einem der vorhergehenden Ansprüche, der mehrere Öffnungen (4, 5, 6, 7) umfasst.

9. Ernteförderer (1) nach Anspruch 8, wobei mindestens einige Öffnungen (4, 5, 6, 7) in einer Breitenrichtung (2) an einer Spiegellinie gespiegelt sind.

10. Ernteförderer (1) nach einem der vorhergehenden Ansprüche, wobei das Förderband ein Endlosband ist.

11. Pilzerntevorrichtung, umfassend einen Ernteförderer (1) nach einem der vorhergehenden Ansprüche, der um mindestens zwei Rollen geführt ist, wobei mindestens eine der Rollen mit einem Antrieb versehen ist.

12. Pilzerntevorrichtung nach Anspruch 11, wobei sich mindestens ein Teil des Ernteförderbands (1) zwischen einem Paar Rollen, um die herum es geführt ist, aufwärts oder abwärts erstreckt.

13. Verfahren zum Transportieren von Pilzen, insbesondere aufwärts oder abwärts, umfassend die Verwendung eines Ernteförderers (1) nach einem der Ansprüche 1-10 und/oder eine Vorrichtung nach Anspruch 11 oder 12.

## Revendications

1. Transporteur de récolte (1) pour des champignons, comprenant:
- une courroie transporteuse, ayant une largeur (2) et s'étendant dans une direction de longueur (3) perpendiculaire à ladite largeur;
- comprenant au moins une ouverture (4, 5, 6, 7) pour recevoir un pied de champignon, dans lequel
- ladite ouverture (4, 5, 6, 7) comprend, dans la direction de longueur (3) de la courroie transporteuse (1), au moins une partie dans laquelle sa largeur diminue, dans lequel
- la diminution de la largeur (2) de l'ouverture s'étend dans la direction de longueur (3) sur une distance qui est plus de la moitié de la diminution de largeur, **caractérisé en ce que** la diminution de la largeur de l'ouverture s'étend sur au moins 20 mm dans la direction de longueur, de préférence au moins 25 mm et mieux encore sur au moins 30 mm, et la diminution est entre 10 et 20 mm et en particulier entre 15 et 20 mm.

2. Transporteur de récolte (1) selon la revendication 1, comprenant au moins un ouverture (4, 5, 6, 7) pour recevoir un pied de champignon, dans lequel ladite ouverture (4, 5, 6, 7) comprend, dans la direction de longueur (3) de la courroie transporteuse, au moins une partie dans laquelle sa largeur augmente, dans lequel l'augmentation de la largeur de l'ouverture s'étend sur au moins 20 mm dans la direction de longueur et l'augmentation est entre 10 et 20 mm et en particulier entre 15 et 20 mm au moins 20 mm dans la direction de largeur.

3. Transporteur de récolte (1) selon la revendication 1 de 2, dans lequel l'ouverture (4, 5, 6, 7) qui comprend, dans la direction de longueur (3) de la courroie transporteuse (1), au moins une partie dans laquelle sa largeur diminue et l'ouverture (4, 5, 6, 7) qui comprend, dans la direction de longueur (3) de la courroie transporteuse (1), au moins une partie dans laquelle sa largeur augmente sont une et la même ouverture (4, 5, 6, 7).

4. Transporteur de récolte (1) selon l'une quelconque des revendications précédentes, dans lequel la diminution de largeur est une diminution progressive.

5. Transporteur de récolte (1) selon l'une quelconque des revendications précédentes, dans lequel la diminution de largeur est une diminution linéaire.

6. Transporteur de récolte (1) selon l'une quelconque des revendications précédentes, dans lequel l'ouverture (4, 5, 6, 7) comprend une forme rhomboïde, en particulier une forme rhomboïde arrondie.

7. Transporteur de récolte (1) selon l'une quelconque des revendications 1 à 6, dans lequel l'ouverture (4, 5, 6, 7) comprend une forme triangulaire, en particulier une forme triangulaire arrondie.

8. Transporteur de récolte (1) selon l'une quelconque des revendications précédentes, comprenant de multiples ouvertures (4, 5, 6, 7).

9. Transporteur de récolte (1) selon la revendication 8, dans lequel au moins certaines ouvertures (4, 5, 6, 7) sont en miroir dans une ligne de miroir dans une direction de largeur (2).

10. Transporteur de récolte (1) selon l'une quelconque des revendications précédentes, dans lequel la courroie transporteuse est une courroie sans fin.

11. Dispositif de récolte de champignons, comprenant un transporteur de récolte (1) selon l'une quelconque des revendications précédentes, guidé autour d'au moins deux rouleaux, dans lequel au moins un des rouleaux est pourvu d'un entraînement.

12. Dispositif de récolte de champignons selon la revendication 11, dans lequel au moins une partie de la courroie transporteuse de récolte (1) s'étend vers le haut ou vers le bas entre une paire de rouleaux autour de laquelle elle est guidée.

13. Procédé pour transporter des champignons, en particulier vers le haut ou vers le bas, comprenant l'utilisation d'un transporteur de récolte (1) selon l'une quelconque des revendications 1 à 10 et/ou d'un dispositif selon la revendication 11 ou 12.
